**Europäisches Patentamt**

**European Patent Office**

**Office européen des brevets**

(19)

(11) Veröffentlichungsnummer : **0 033 457**
**B1**

(12) # EUROPÄISCHE PATENTSCHRIFT

(45) Veröffentlichungstag der Patentschrift :
**11.05.83**

(21) Anmeldenummer : **81100321.9**

(22) Anmeldetag : **17.01.81**

(51) Int. Cl.³ : **C 09 C   1/62**

(54) **Verfahren zur Herstellung von metallisch glänzenden Metallpigmenten.**

(30) Priorität : **31.01.80 DE 3003352**

(43) Veröffentlichungstag der Anmeldung :
**12.08.81 Patentblatt 81/32**

(45) Bekanntmachung des Hinweises auf die Patenterteilung : **11.05.83 Patentblatt 83/19**

(84) Benannte Vertragsstaaten :
**CH DE FR GB IT LI**

(56) Entgegenhaltungen :
**DE C 466 463**

(73) Patentinhaber : **BASF Aktiengesellschaft**
**Carl-Bosch-Strasse 38**
**D-6700 Ludwigshafen (DE)**

(72) Erfinder : **Ostertag, Werner, Dr.**
**Oberer-Bergel-Weg 2**
**D-6718 Gruenstadt (DE)**
Erfinder : **Bittler, Knut, Dr.**
**Am Egelsee 14**
**D-6720 Speyer (DE)**
Erfinder : **Bock, Gustav, Dr.**
**Waldstrasse 16**
**D-6730 Neustadt (DE)**

## Verfahren zur Herstellung von metallisch glänzenden Metallpigmenten

Vorliegende Erfindung betrifft ein Verfahren zur Herstellung von metallisch glänzenden Farbpigmenten. Metalleffekte sind bei Lackierungen, aber auch bei Kunststoffeinfärbungen und Farbdispersionen zunehmend von Interesse.

Bei der Herstellung von Metallic-Lackierungen wird in der Technik so verfahren, daß in den Lack sowohl Metallpigmente als auch transparentes Farbpigment eindispergiert werden. Als Metallpigment wird überwiegend plättchenförmiges Aluminium und als transparentes Farbpigment wird wegen seiner Temperatur- und UV-Beständigkeit meist Eisenoxid eingesetzt.

Um die aus der Kombination von transparentem Oxid und Metallpigment resultierenden optischen Effekte mit einem einzigen Pigment zu erzielen, was Vorteile bei der Herstellung von pigmentiertem Lack bietet, — da nur ein Pigment dispergiert werden muß, — war in der Vergangenheit versucht worden, aus wäßriger Lösung Eisenoxid auf Aluminiumpigment direkt aufzufällen (7 54 081 337). Man erhält dabei ein goldfarbenes Pigment mit metallischem Glanz.

Der Nachteil des Verfahrens ist jedoch, daß Aluminiumpigment sehr leicht in wäßrigem Medium reagiert, so daß es außerordentlich schwierig ist, Pigmente mit reproduzierbaren Eigenschaften zu erhalten. Das Verfahren hat den weiteren Nachteil, daß nur in einem begrenzten pH-Bereich und in Gegenwart teurer komplexbildender Zusätze gearbeitet werden kann. Außerdem muß mit äußerst verdünnten Lösungen (von vorzugsweise 0,000 1 bis 0,02 mol Eisen-Ki/BL salz/1) vorgegangen werden, was die technische Herstellung des Pigments zumindest stark beeinträchtigt. Zu der komplizierten Beschichtungsprozedur kommen schließlich weitere, langwierige Arbeitsgänge, wie Filtrieren, Waschen und Trocknen des beschichteten Pigmentes.

Ziel der vorliegenden Erfindung war es, ein Verfahren zur Herstellung von metallisch glänzenden Farbpigmenten, bestehend aus einem metallischen Kern, dessen Oberfläche zumindest teilweise mit Oxiden des Eisens belegt ist, bereitzustellen, bei dem es gelingt, Pigmente mit reproduzierbaren Eigenschaften zu erhalten, und das ohne Schwierigkeiten in größerem Produktionsmaßstab durchführbar ist.

Es wurde nun gefunden, daß diese Aufgabe dadurch gelöst werden kann, daß man Eisenpentacaronyl in einer Wirbelschicht aus den metallischen Kernen mit Sauerstoff bei Temperaturen von oberhalb 100 °C in Gegenwart von Inertgasen zu Eisenoxid und Kohlendioxid oxidiert, mit der Maßgabe, daß die Menge des dampfförmig in die Wirgelschicht eingeführten Eisenpentacarbonyls, bezogen auf die insgesamt in der gleichen Zeiteinheit in die Wirbelschicht eingeführten Gase 5 Vol.-% nicht übersteigt.

Zur Durchführung des erfindungsgemäßen Verfahrens werden in einem Wirbelreaktor die metallischen Kerne vorgelegt und auf die jeweils gewünschte Reaktionstemperatur vorgeheizt. Diese soll mindestens 100 °C betragen, um eine rasche Umsetzung des Eisencarbonyls zu Eisenoxiden, insbesondere $Fe_2O_3$ zu gewährleisten. Für die Ausbildung möglichst gleichmäßiger $Fe_2O_3$-Beläge ist es zweckmäßig, die Reaktionstemperatur nicht allzu hoch zu halten, d. h. nicht über 400 °C ansteigen zu lassen. Im allgemeinen arbeitet man in einem Temperaturbereich von 150 bis 300 °C. Sollte die Reaktionswärme der Eisencarbonyloxidation nicht ausreichen, um die gewünschte Temperatur im Wirbelreaktor aufrecht zu erhalten, so ist es ohne weiteres möglich, die benötigte Wärme von außen zuzuführen, beispielsweise durch im Reaktor zugeordnete Heizschlagen oder durch IR-Strahler. Als metallische Kerne werden pulverförmige Metallteilchen möglichst gleichförmiger Größenverteilung eingesetzt. Als Korngrößen kommen Teilchen mit Größen von 1 bis 200 µ in Betracht. Die einzusetzenden Teilchen sind zweckmäßig plättchenförmig, da hiermit hinsichtlich Metallic-Effekten die günstigsten Ergebnisse erzielt werden. Als Material für die metallischen Kerne kommen im Prinzip alle Metalle in Betracht, die in der oben erwähnten Form noch metallisch glänzend hergestellt werden können. Insbesondere kommen Teilchen aus Kupfer und seinen Legierungen wie Messing oder Bronzen, d. h. Legierungen des Kupfers mit Zink und/oder Zinn, vor allem aber Aluminium und seine Legierungen, z. B. Aluminiumbronze in Betracht.

Nach Aufheizung der im Wirbelreaktor vorgelegten metallischen Kerne auf die gewünschte Temperatur werden diese mit einem Inertgas, z. B. Stickstoff, Argon oder einem anderen gegenüber den Reaktionskomponenten inerten Gas verwirbelt und dann das Eisenpentacarbonyl dampfförmig in den Reaktor eingeführt. Der zur Oxidation erforderliche Sauerstoff wird zweckmäßig dem Wirbelgas zugemischt. Der Carbonyldampf kann mit einem Inertgas verdünnt sein ; wesentlich ist es, daß die Menge des in den Wirbelreaktor eingetragenen Carbonyldampfes (gerechnet bei Normalbedingungen, d. h. 20 °C und 760 mm Hg), bezogen auf die in der gleichen Zeiteinheit in die Wirbelschicht eingeführten Gase — Wirbelgas, Verbrennungsluft, Verdünnungsgase — 5 Vol.-% nicht übersteigt.

Zweckmäßig arbeitet man mit Eisenpentacarbonylkonzentrationen von 0,1 bis 2,5 Vol.-%. Übersteigt die Carbonylkonzentration 5 Vol.-% wesentlich, so ist eine reproduzierbare Beschichtung, d. h. die Herstellung von Pigmenten mit reproduzierbaren Eigenschaften nicht mehr möglich.

In Abhängigkeit von der Dauer der erfindungsgemäßen Behandlung bzw. der Konzentration des Eisenpentacarbonyldampfes bzw. des Verhältnisses an eingeleitetem Eisenpentacarbonyldampf zu vorgelegten Metallkernen gelingt es, Pigmente zu erhalten, deren Farbton von hellgoldgelb bis dunkelviolett gezielt und reproduzierbar eingestellt werden kann. Selbstverständlich hängt der Farbton auch von der Partikelgröße bzw. der Oberfläche der vorgelegten Metallkerne ab. Im allgemeinen enthalten die Pigmente von 0,5 bis zu etwa 15 Gew.-% $Fe_2O_3$.

Die nach dem erfindungsgemäßen Verfahren hergestellten Pigmente können ohne weitere Nachbehandlung direkt verwendet werden. Sie zeichnen sich dadurch aus, daß ihr Farbton reproduzierbar ohne große Schwierigkeiten eingestellt werden kann und daß sie in Lacken ohne große Schwierigkeiten dispergierbar sind.

## Beispiel 1

In einem Wirbelreaktor aus Glas, der mit einem Frittenboden aus Quarz ausgestattet ist (ID 60 mm), werden 150 g plättchenförmige Aluminiumkerne (mittlere Korngröße 50 µ Al) gegeben und mit einem Gasstrom zum Wirbeln gebracht. Das Aluminiumpigment weist eine Oberfläche von 2 m²/g auf. Der zum Wirbeln benötigte Gasstrom (300 l/h) setzt sich aus 200 l/h Stickstoff und 100 l/h Luft zusammen. Die Temperatur im Wirbelbett wird durch Infratorstrahler, die um das Wirbelbett herum angeordnet sind, auf 200 °C angehoben.

Anschließend wird Carbonyldampf mit Stickstoff über eine zweiflutige Düse, welche unmittelbar über der Fritte installiert ist, in das Wirbelbett eingedüst. Der Carbonyldampf wird in einem Verdampfer erzeugt und mit Hilfe eines Trägergases (100 l $N_2$/h) vom Verdampfer zur Düse gefördert. Dort wird der carbonylhaltige Gasstrom mit weiteren 100 l/h Stickstoff verdüst. Pro Stunde werden auf diese Weise insgesamt 58,2 g Eisenpentacarbonyl in den Reaktor eingebracht, entsprechend 1,3 Vol.-% Fe $(CO)_5$, bezogen auf die Volumina der übrigen in den Reaktor eingeführten Gase. Nach einer Dauer von 1,5 h ist das ursprünglich silbergraue Aluminium-Pigment goldgelb geworden, nach einer weiteren Stunde ist es rotgold.

Das metallisch glänzende Pigment wird mit einem Alkyd-Melaminharz-Lack (DIN-Entwurf 53 238) angerieben und die Dispersion anschließend abgerakelt, wobei ein pigmentierter Lackfilm mit einem Metall-Effekt erhalten wird. Die goldfarbene Lackierung zeichnet sich durch Brillanz und Farbreinheit aus.

## Beispiel 2

In der unter Beispiel 1 beschriebenen Apparatur werden eine Reihe von ähnlichen Beschichtungsversuchen durchgeführt. Hierbei wird die Art und die Korngröße des eingesetzten Metallpigments, die Menge des in den Reaktor geleiteten Wirbelgases, die Temperatur und die Dauer der Beschichtung variiert. Bei sämtlichen Versuchen werden stündlich 14 g Eisenpentacarbonyl mit 200 l/h Stickstoff als Trägergas in den Reaktor eingetragen.

In der nachstehenden Tabelle sind die Daten der Versuche zusammengefaßt.

| Versuchs-nummer | eingesetztes Pigment | mittlere Korn-größe in /u | Wirbelgasmenge Luft in l/h | Wirbelgasmenge $N_2$ in l/L | Vol.-% Fe$(CO_5)$ bez.auf die übrigen in den Reaktor eingeführten Gase |
|---|---|---|---|---|---|
| 1 | Aluminium (plättchenförmig) | 25 | 100 | 200 | 0,32 |
| 2 | " | 25 | 100 | 200 | 0,32 |
| 3 | " | 30 | 120 | 200 | 0,31 |
| 4 | " | 30 | 150 | 200 | 0,29 |
| 5 | " | 35 | 150 | 200 | 0,29 |
| 6 | Aluminium (plättchenförmig) | 10 | 100 | 100 | 0,40 |
| 7 | " | 10 | 100 | 100 | 0,40 |
| 8 | " | 25 | 50 | 300 | 0,29 |
| 9 | Kupfer (plättchenförmig) | 60 | 100 | 200 | 0,32 |
| 10 | Aluminium (plättchenförmig) | 25 | 200 | – | 0,40 |

(Fortsetzung)

| Versuchs-nummer | eingesetztes Pigment | mittlere Korn-größe in $\mu$ | Wirbelgasmenge Luft in l/h | $N_2$ in $^2$l/L | Vol.-% $Fe(CO_5)$ bez.auf die übri-gen in den Reaktor eingeführten Gase |
|---|---|---|---|---|---|
| 11 | " | 25 | 200 | - | 0,40 |
| 12 | " | 25 | 200 | - | 0,40 |

Tabelle (Fortsetzung)

| Versuchs-nummer | Temperatur des Wirbel-betts in $^o$C | Versuchsdauer in Stunden | Farbe des Produktes | Gew.-% $Fe_2O_3$ des Pigmentes |
|---|---|---|---|---|
| 1 | 160 | 4 | schwach gelb | 1,1 |
| 2 | 180 | 4 | hellgold | 3,3 |
| 3 | 200 | 4 | rötl. gold | 6,4 |
| 4 | 220 | 4 | rot-violett | 12,0 |
| 5 | 250 | 4 | violett | 16,0 |
| 6 | 230 | 5 | violett | 15,7 |
| 7 | 230 | 3 | rotgold | 9,2 |
| 8 | 250 | 2 | rötl. gold | 6,1 |
| 9 | 220 | 1 | rot | 2,9 |
| 10 | 250 | 1 | hellgold | 3,0 |
| 11 | 250 | 3 | rotgold | 8,8 |
| 12 | 250 | 4 | rot-violett | 12,1 |

Aus den Daten der Tabelle geht hervor, daß das Al-pigment mit zunehmendem $Fe_2O_3$-Gehalt eine schwachgelbe, hellgoldene, rötlichgoldene, rote und schließlich violette Farbe annimmt. Die Pigmente zeigen alle metallischen Glanz. In elektronenmikroskopischen Aufnahmen der Proben 1 bis 5 und 10 bis 12 läßt sich deutlich die ansteigende Belegung der Al-Oberflächen mit Eisenoxid erkennen und mit der Farbänderung korrelieren. Sämtliche Pigmente sind in Lacken sehr gut dispergierbar. Die durch Abrakeln der Dispersionen hergestellten pigmentierten farbigen Lackfilme weisen sehr deutliche Metallic-Effekte auf.

**Ansprüche**

1. Verfahren zur Herstellung von metallisch glänzenden Farbpigmenten, die aus einem metallischen Kern, dessen Oberfläche zumindest teilweise mit Oxiden des Eisens belegt ist, bestehen, dadurch gekennzeichnet, daß man Eisenpentacarbonyl in einer Wirbelschicht aus den metallischen Kernen mit Sauerstoff bei Temperaturen von oberhalb 100 °C in Gegenwart von Inertgasen zu Eisenoxid und Kohlendioxid oxidiert, mit der Maßgabe, daß die Menge des dampfförmig in die Wirbelschicht eingeführten Eisenpentacarbonyls, bezogen auf die insgesamt in der gleichen Zeiteinheit in die Wirbelschicht eingeführten Gase 5 Vol.-% nicht übersteigt.

2. Verfahren nach Anspruch 1, dadurch gekennzeichnet, daß man bei Temperaturen unterhalb von 400 °C oxidiert.

3. Verfahren nach Ansprüchen 1 bis 2, dadurch gekennzeichnet, daß man bei Temperaturen von 150 bis 300 °C oxidiert.

4. Verfahren nach Ansprüchen 1 bis 3, dadurch gekennzeichnet, daß man als Metallkerne solche aus Kupfer oder Aluminium oder deren Legierungen einsetzt.

5. Verfahren nach Ansprüchen 1 bis 4, dadurch gekennzeichnet, daß die Metallkerne eine Teilchengröße von 1 bis 100 μ haben.

6. Verfahren nach Ansprüchen 1 bis 5, dadurch gekennzeichnet, daß die Metallkerne eine plättchenförmige Struktur haben.

**Claims**

1. A process for the preparation of colored pigments which have a metallic luster and consist of a metallic core whose surface is at least partially covered with an iron oxide, wherein iron pentacarbonyl is oxidized to iron oxide and carbon dioxide in a fluidized bed of the metallic cores with oxygen at above 100 °C in the presence of an inert gas, with the proviso that the amount of iron pentacarbonyl vapor introduced into the fluidized bed does not exceed 5 % by volume, based on the total gases introduced into the fluidized bed over the same period of time.

2. A process as claimed in claim 1, wherein the oxidation is carried out at below 400 °C.

3. A process as claimed in claims 1 and 2, wherein the oxidation is carried out at from 150 to 300 °C.

4. A process as claimed in claims 1 to 3, wherein the metallic cores employed consist of copper or aluminum or a copper alloy or aluminum alloy.

5. A process as claimed in claims 1 to 4, wherein the metallic cores have a particle size of from 1 to 100 μm.

6. A process as claimed in claims 1 to 5, wherein the metallic cores have a flake structure.

**Revendications**

1. Procédé pour la préparation de pigments colorants à éclat métallique qui sont faits d'un noyau métallique dont la surface est garnie, au moins en partie, d'oxydes de fer, caractérisé en ce qu'on oxyde du pentacarbonyle de fer, dans une couche turbulente formée des noyaux métalliques, avec de l'oxygène, à une température de plus de 100 °C en présence de gaz inertes, pour former de l'oxyde de fer et de l'anhydride carbonique, et en veillant à ce que la quantité du pentacarbonyle de fer introduit sous forme de vapeur dans la couche turbulente ne dépasse pas 5 % en volume par rapport aux gaz introduits au total dans la couche turbulente dans la même unité de temps.

2. Procédé selon la revendication 1, caractérisé en ce qu'on oxyde à des températures inférieures à 400 °C.

3. Procédé selon la revendication 1 ou 2, caractérisé en ce qu'on oxyde à des températures de 150 à 300 °C.

4. Procédé selon l'une quelconque des revendications 1 à 3, caractérisé en ce qu'on utilise, en tant que noyaux métalliques, des noyaux de cuivre ou d'aluminium ou de leurs alliages.

5. Procédé selon l'une quelconque des revendications 1 à 4, caractérisé en ce que les noyaux métalliques ont une grosseur de particules de 1 à 100 microns.

6. Procédé selon l'une quelconque des revendications 1 à 5, caractérisé en ce que les noyaux métalliques ont une structure en forme de plaquettes.